# EUROPÄISCHE PATENTSCHRIFT

(11) **EP 0 810 710 B1**
(45) Veröffentlichungstag und Bekanntmachung des Hinweises auf die Patenterteilung: **12.10.2005**
(21) Anmeldenummer: 97108342.3
(22) Anmeldetag: 22.05.1997
(51) Int. Cl.: H02J 1/00, H02J 1/10

(54) **Stromversorgungsnetz**
Power supply network
Réseau d'alimentation électrique

(30) Priorität: 31.05.1996 DE 19622066
(43) Veröffentlichungstag der Anmeldung: 03.12.1997
(73) Patentinhaber: Infineon Technologies AG, 81669 München (DE)
(72) Erfinder: Graf, Alfons, Dr.-Ing., 86916 Kaufering (DE)
(74) Vertreter: Bickel, Michael

(56) Entgegenhaltungen:
- DE-U- 29 520 149
- GB-A- 2 277 618
- US-A- 5 381 296

## Beschreibung

Die vorliegende Erfindung betrifft ein Stromversorgungsnetz mit wenigstens einer Gleichspannungsquelle und wenigstens einer Last, wobei jeweils zwischen positivem Pol der Batterie und der Last ein Halbleiterschalter eingesetzt ist und der Ausgang des Halbleiterschalters mit einer Stromversorgungshauptleitung verbunden ist.

Insbesondere bei Stromversorgungsnetzen im KFZ-Bereich werden Halbleiterschalter, insbesondere intelligente Halbleiterschalter mit einer Temperaturüberwachungsschaltung, Überspannungsschutz und dergleichen eingesetzt. Die großen Ströme aus den Energiequellen Batterie und Generator können durch derartige intelligente Halbleiterschalter geschaltet werden. Das übrige Bordnetz wird entweder durch normale Sicherungen oder durch weitere Halbleiterschalter abgesichert. Eine derartige individuelle Absicherung ist notwendig, weil die beiden Halbleiterschalter, die zwischen Batterie und Last bzw. zwischen Generator und Last geschaltet sind für sehr große Ströme auszulegen sind und somit auf einen Kurzschluß einer dünneren Leitung im restlichen Bordnetz nicht reagieren. Diese dünne Leitung kann demnach im ungünstigsten Fall zerstört werden. Der Aufwand bei einer derartigen Anordnung, um einen vollständigen Schutz aller nachgeschalteten Leitungen zu erreichen, ist deshalb beträchtlich.

Die GB-A-2277618 beschreibt ein Stromversorgungsnetz für ein Kraftfahrzeug das eine an eine Batterie angeschlossene zentrale Stromleitung aufweist. Über Steuereinheiten, die jeweils einen Controller und mehrere intelligente Schalter aufweisen, sind Lasten an diese zentrale Stromleitung angeschlossen. Die Steuereinheiten sind dabei über ein Bussystem miteinander gekoppelt, wobei eine der Steuereinheiten die Funktion einer zentralen Steuereinheit besitzt, während die anderen Steuereinheiten untergeordnete Steuereinheiten (slave controller) sind.

Aufgabe der vorliegenden Erfindung ist es daher, ein Stromversorgungsnetz anzugeben, welches den zuvor genannten Nachteil nicht aufweist.

Diese Aufgabe wird durch Anspruch 1 gelöst. Weiterbildungen sind Gegenstand der Unteransprüche.

Erfindungsgemäß wird vorgeschlagen, nur noch die beiden Halbleiterschalter gemäß dem Oberbegriff des Anspruchs 1 zu verwenden, diese aber mit einem Strommeßausgang zu versehen. Ein Mikrokontroller, welcher üblicherweise in einem KFZ zur Mo-torsteuerung oder zur Steuerung der elektrischen Einrichtungen dient, kann dann zusätzlich aufgrund der momentan eingeschalteten Lasten den momentan fließenden Laststrom vorhersagen und mit den Stromsignalen aus den Halbleiterschaltern vergleichen und so auf Überlast und Unterlast reagieren.

In einer Weiterbildung können die oben genannten Halbleiterschalter bereits eine intelligente Auswertelogik aufweisen, die einerseits den durch den Halbleiterschalter fließenden Strom mit einem zuvor digital vom Mikrokontroller übermittelten Wert vergleichen und bei Überschreiten des Sollwerts den jeweiligen Halbleiterschalter sperren. Dadurch wird vorteilhafterweise der Mikrokontroller in seiner Rechenleistung entlastet, die anderen Aufgaben zur Verfügung gestellt werden kann.

In einer weiteren Ausgestaltung, können die beiden Halbleiterschalter in ihrem Durchlaßwiderstand steuerbar sein, indem z.B. einzelne FET-Zellenblöcke zu- oder abgeschaltet werden können. Dadurch läßt sich erfindungsgemäß eine Strombegrenzung von außen einstellen. Auf diese Weise kann vorteilhaft der Kurzschlußstrom durch die Halbleiterschalter erniedrigt werden.

Die Erfindung wird nachfolgend anhand einer Figur näher erläutert.

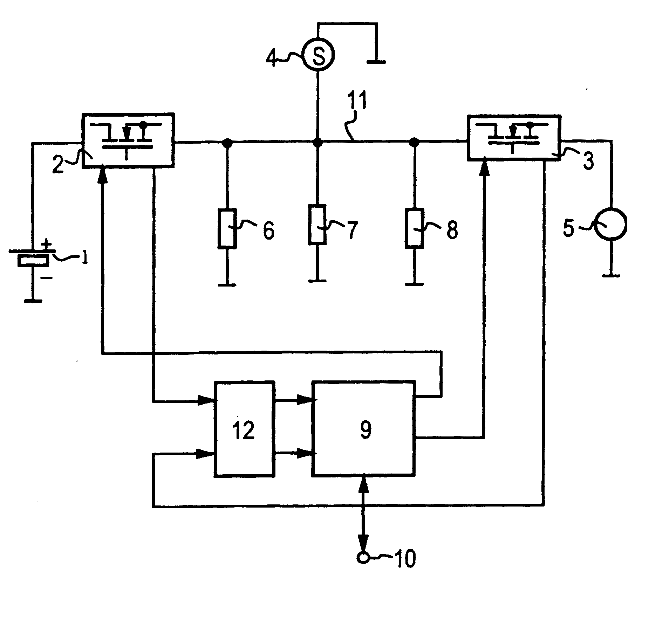

In der Figur ist mit 1 eine Autobatterie bezeichnet, deren negativer Pol mit Masse und deren positiver Pol mit einem Anschluß einer Laststrecke eines intelligenten Halbleiterschalters 2 verbunden ist. Der intelligente Halbleiterschalter 2 ist ausgangsseitig mit einer Stromversorgungshauptleitung 11 verbunden. Unter einem intelligenten Halbleiterschalter ist ein Halbleiterschalter mit einer Ansteuerschaltung und evtl. Schutzschaltungen wie Übertemperaturschutz und/oder Überlast- und oder Unterlastschutz und dergleichen zu verstehen. An dieser Stromversorgungshauptleitung 11 sind verschiedene Lasten, im vorliegenden Ausführungsbeispiel drei Lasten 6, 7, 8 gegen Masse verschaltet. Des weiteren ist eine zusätzliche Last in Form eines Anlassers 4 mit der Stromversorgungshauptleitung verbunden. Mit 5 ist ein Generator bezeichnet, der zwischen Masse und einem Anschluß eines weiteren Halbleiterschalters 3 geschaltet ist. Der zweite Anschluß des Halbleiterschalters 3 ist ebenfalls mit der Stromversorgungshauptleitung verbunden. Die Halbleiterschalter 2 und 3 weisen Steuereingänge auf, die mit jeweiligen Ausgängen eines Mikrocomputers 9 verbunden sind. Des weiteren weisen die Halbleiterschalter 2 und 3 Strommeßausgänge auf, die mit den Eingängen einer Analog-Digital-Wandlereinheit 12 verbunden sind. Diese Analog-Digital-Wandlereinheit 12 ist ausgangsseitig mit dem Mikrocomputer 9 verschaltet. Der Mikrocomputer 9 ist über eine nicht dargestellte Speichereinheit über einen Bus 10 gekoppelt.

Des weiteren ist der Mikroprozessor 9 für alle elektrischen Schaltvorgänge im Kraftfahrzeug verantwortlich. Hierzu können entsprechende Sensoren am Zündschloß und sämtlichen Schaltern vorgesehen sein. Der Mikroprozessor kann als sogenannter Mikrokontroller ausgebildet sein, so daß sämtliche Schnittstellen und Speicher auf einem Chip integriert sind. Der Mikroprozessor 9 kann aufgrund der momentan eingeschalteten Lasten den momentan fließenden Laststrom vorhersagen und mit den Stromsignalen, welche über die entsprechenden Leitungen von den Halbleiterschaltern 2, 3 über den Analog-Digital-Wandler 12 zum Mikroprozessor 9 gelangen, vergleichen und so auf Über- oder Unterlast reagieren. Z.B. beim Betätigen des Anlassers 4 fließen Ströme bis zu 400 A. Bei noch größeren Kurzschlußströmen reagieren der Halbleiterschalter 2 oder 3 durch den integrierten Kurzschlußschutz selbstständig ohne den Mikrokontroller 9, 12.

Ein anderes Verhalten ergibt sich im Normalbetrieb, d.h. nach dem Anlassen des Fahrzeugs. Angenommen es soll aufgrund der eingeschalteten Lasten ein Strom von 20 A fließen, so kann der Mikrokontroller diesen Strom von den Halbleiterschaltern 2 und 3 abfragen. Auf Überlastströme zwischen 20 A und ca. 400 A sowie auf Unterlastströme bis 20 A kann nun der Mikrokontroller 9, 12 entsprechend reagieren. Bei niederohmigen Kurzschlüssen mit Strömen größer 400 A reagieren wieder der Halbleiterschalter 2 und 3 durch den mitintegrierten Kurzschlußschutz selbst. Auf diese Weise erhält man einen Kurzschlußschutz bei niederohmigen Kurzschlüssen sowie einen Überlastschutz bei höherohmigen Kurzschlüssen, realisiert mit zwei extrem niederohmigen intelligenten Halbleiterschaltern 2 und 3 mit jeweiligem Stromabtastausgang.

Durch fortschreitende Integrationsmöglichkeiten bei niederohmigen Halbleiterschaltern bzw. durch die sogenannte Chipauf-Chip-Methode, kann auch ein Teil der Intelligenz des Mikrokontrollers in die jeweiligen Schalter 2 und 3 mitintegriert werden. Hierzu ist zum Beispiel ein einfacher D/A-Wandler und ein Komparator denkbar um die ermittelten Ströme analog zu vergleichen oder ein A/D-Wandler und ein digitaler Komparator, um einen digitalen Vergleich durchzuführen. Des weiteren ist eine Auswertelogik und entsprechende Ansteuerschaltung für den Halbleiterschalter vorzusehen. Die Schalter 2 und 3 erhalten dann vom Mikrokontroller nur noch den zu erwartenden Stromfluß in digitaler oder analoger Form und vergleichen diesen mit dem momentan fließenden. Bei Überschreitung wird dann durch die zusätzliche intelligente Schaltung in den Halbleiterschaltern dieser gesperrt.

Ein ähnliches Verhalten wie oben läßt sich auch dadurch realisieren, daß man Halbleiterschalter verwendet, bei denen sich entweder der Durchlaßwiderstand Rₒₙ oder die Strombegrenzung von außen einstellen läßt. Die Erhöhung des Durchlaßwiderstands Rₒₙ könnte z.B. durch Abschaltung von FET-Zellenblöcken erfolgen, wodurch sich automatisch auch der Kurzschlußstrom erniedrigt. Dies bringt zwar mit sich, daß man nun bei kleinen Lastströmen wieder mehr Verlustleistung im Halbleiterschalter erzeugt, für bestimmte Anwendung in bestimmten Stromversorgungsnetzen kann dies jedoch auch von Vorteil, bzw. ausreichend sein.

## Patentansprüche

1. Stromversorgungsnetz mit wenigstens einer Gleichspannungsquelle (1, 5) und wenigstens zwei Lasten, wobei zwischen positivem Pol der Gleichspannungsquelle und den Lasten ein Halbleiter-Schalter (2, 3) eingesetzt ist, und der Ausgang des Halbleiterschalters mit einer Stromversorgungshauptleitung (11) verbunden ist,
**dadurch gekennzeichnet, daß**
- die Lasten (4, 6, 7, 8) ohne Zwischenschaltung einer Sicherung mit der Stromversorgungshauptleitung (11) verbunden sind,
- der Halbleiterschalter (2) einen Strommeßausgang aufweist,
- ein Mikrocomputer (9) vorgesehen ist, der mit einer anlogen Meßvorrichtung (12) versehen ist, die den Strom des Strommeßausgangs erfaßt und digitalisiert an den Mikrocomputer (9) weiterleitet,
- der Mikrocomputer über Steuerausgänge den Halbleiterschalter (2) steuert.

2. Stromversorgungsnetz nach Anspruch 1,
**dadurch gekennzeichnet, daß** wenigstens ein Generator (5) vorgesehen ist, der über einen weiteren Halbleiterschalter (3) mit der Stromversorgungshauptleitung (11) verbunden ist und der einen Strommeßausgang aufweist.

3. Stromversorgungsnetz nach Anspruch 1,
**dadurch gekennzeichnet, daß** der Mikrocomputer (9) den zulässigen Laststrom auf der Stromversorgungshauptleitung (11) aufgrund der eingeschalteten Lasten (4, 6, 7, 8) ermittelt und bei Über- oder Unterlast den jeweiligen Halbleiterschalter (2, 3) sperrt.

4. Stromversorgungsnetz nach einem der vorhergehenden Ansprüche,
**dadurch gekennzeichnet, daß** der Halbleiterschalter (2, 3) eine intelligente Auswertelogik aufweist, die einerseits den durch den Halbleiterschalter (2, 3) fließenden Strom mit einen vom Mikrocomputer (9) übermittelten Wert vergleicht und bei Überschreiten des Sollwerts den Halbleiterschalter (2, 3) sperrt.

5. Stromversorgungsnetz nach einem der vorhergehenden Ansprüche,
**dadurch gekennzeichnet, daß** der Halbleiterschalter (2, 3) einen einstellbaren Durchlaßwiderstand aufweist.

6. Stromversorgungsnetz nach Anspruch 5,
**dadurch gekennzeichnet, daß** der Halbleiterschalter (2, 3) eine Vielzahl von parallel schaltbaren Einzelzellen aufweist und daß der Kurzschlußstrom durch die Anzahl parallel geschalteter Einzelzellen einstellbar ist.

## Claims

1. Power supply network having at least one DC voltage source (1, 5) and at least two loads, with a semiconductor switch (2, 3) being inserted between the positive pole of the DC voltage source and the loads, and with the output of the semiconductor switch being connected to a main power supply line 11,
**characterized in that**
- the loads (4, 6, 7, 8) are connected to the main power supply line (11) without the interposition of a fuse,
- the semiconductor switch (2) has a current measurement output,
- a microcomputer (9) is provided, which is provided with an analogue measurement apparatus (12), which detects the current at the current measurement output and passes it on in a digitized form to the microcomputer (9),
- the microcomputer controls the semiconductor switch (2) via control outputs.

2. Power supply network according to Claim 1,
**characterized in that** at least one generator (5) is provided, is connected via a further semiconductor switch (3) to the main power supply line (11) and has a current measurement output.

3. Power supply network according to Claim 1,
**characterized in that** the microcomputer (9) determines the permissible load current on the main power supply line (11) on the basis of the connected loads (4, 6, 7, 8), and switches off the respective semiconductor switch (2, 3) in the event of an overload or underload.

4. Power supply network according to one of the preceding claims,
**characterized in that** the semiconductor switch (2, 3) has intelligent evaluation logic, which on the one hand compares the current flowing through the semiconductor switch (2, 3) with a value that is transmitted from the microcomputer (9), and switches off the semiconductor switch (2, 3) if the nominal value is exceeded.

5. Power supply network according to one of the preceding claims,
**characterized in that** the semiconductor switch (2, 3) has a variable switched-on resistance.

6. Power supply network according to Claim 5,
**characterized in that** the semiconductor switch (2, 3) has a large number of individual cells which can be connected in parallel, and **in that** the short-circuit current can be adjusted by means of the number of individual cells connected in parallel.

## Revendications

1. Réseau d'alimentation électrique avec au moins une source de tension continue (1, 5) et au moins deux charges, dans lequel un commutateur statique (2, 3) est inséré entre le pôle positif de la source de tension continue et les charges, et la sortie du commutateur statique est reliée à une ligne principale d'alimentation électrique (11),
**caractérisé en ce que**
- les charges (4, 6, 7, 8) sont reliées à la ligne principale d'alimentation électrique (11) sans montage intermédiaire d'un fusible,
- le commutateur statique (2) présente une sortie de mesure de courant,
- un micro-ordinateur (9) est muni d'un dispositif de mesure analogique (12) détectant le courant de la sortie de mesure de courant et le transmettant sous forme numérisée au micro-ordinateur (9), et
- le micro-ordinateur commande le commutateur statique (2) par des sorties de commande.

2. Réseau d'alimentation électrique selon la revendication 1,
**caractérisé par**
au moins un générateur (5) qui, par un autre commutateur statique (3), est relié à la ligne principale d'alimentation électrique (11) et présente une sortie de mesure de courant.

3. Réseau d'alimentation électrique selon la revendication 1,
**caractérisé en ce que**
le micro-ordinateur (9) détecte le courant de charge admissible sur la ligne principale d'alimentation électrique (11) en raison des charges présentes et bloque le commutateur statique (2, 3) respectif en cas de surcharge ou de sous-charge.

4. Réseau d'alimentation électrique selon l'une quelconque des revendications précédentes,
**caractérisé en ce que**
le commutateur statique (2, 3) présente une logique d'exploitation intelligente qui, d'une part, compare le courant traversant le commutateur statique (2, 3) avec une valeur transmise par le micro-ordinateur (9) et bloque le commutateur statique (2, 3) lors d'un dépassement de la valeur de consigne.

5. Réseau d'alimentation électrique selon l'une quelconque des revendications précédentes,
**caractérisé en ce que**
le commutateur statique (2, 3) présente une résistance directe réglable.

6. Réseau d'alimentation électrique selon la revendication 5,
**caractérisé en ce que**
le commutateur statique (2, 3) présente une multitude de cellules individuelles commutables parallèlement, et le courant de court-circuit est réglable par le nombre des cellules individuelles montées en parallèle.
